# EUROPÄISCHE PATENTANMELDUNG

(11) **EP 4 718 678 A1**
(43) Veröffentlichungstag der Anmeldung: **01.04.2026**
(21) Anmeldenummer: 25201909.6
(22) Anmeldetag: 12.09.2025
(51) Int. Cl.: H02J 7/40, H01M 10/42, H01M 50/247, H02J 7/80

(54) **SYSTEM MIT ZUMINDEST EINEM AKKUMULATOR UND EINER BEREITSTELLUNGSEINHEIT**

(30) Priorität: 27.09.2024 DE 102024128090
(71) Anmelder: Einhell Germany AG, 94405 Landau / Isar (DE)
(72) Erfinder: Thannhuber, Markus, 94405 Landau (DE); Szekacs, Endre, 94363 Oberschneiding (DE); Fech, Daniel, 86647 Buttenwiesen (DE); Walter, Juergen, 88682 Salem (DE)
(74) Vertreter: Canzler & Bergmeier Patentanwälte Partnerschaft mbB

(57) **Zusammenfassung**

Die Erfindung betrifft System (1) mit zumindest einem Akkumulator (2), vorzugsweise Arbeitsgeräteakkumulator, insbesondere loT-Akkumulator und/oder IoT-Arbeitsgeräteakkumulator, wobei der Akkumulator (2) zumindest eine Steuereinheit (3, 24) zum Steuern und/oder Überwachen des Akkumulators (2) und/oder eines mit dem Akkumulator (2) gekoppelten Endgeräts (4) und zumindest eine Akkudatenschnittstelle (5) zum Datenaustausch umfasst, und mit zumindest einer Bereitstellungseinheit (6, 7, 8), von der Betriebsprogrammdaten (9) für die zumindest eine Steuereinheit (3, 24) zum Steuern und/oder Überwachen des Akkumulators (2) und/oder des mit dem Akkumulator (2) gekoppelten Endgeräts (4) über die Akkudatenschnittstelle (5) an den Akkumulator (2) übertragen werden können.

## Beschreibung

Die vorliegende Erfindung betrifft ein System mit zumindest einem Akkumulator, vorzugsweise einem Arbeitsgeräteakkumulator, Gartengeräteakkumulator und/oder Werkzeuggeräteakkumulator, insbesondere einem IoT-Akkumulator und/oder einem IoT-Arbeitsgeräteakkumulator, IoT-Gartengeräteakkumulator und/oder IoT-Werkzeuggeräteakkumulator. Der Akkumulator weist zumindest eine Steuereinheit zum Steuern und/oder Überwachen des Akkumulators und/oder eines mit dem Akkumulator gekoppelten Endgeräts auf. Weiterhin umfasst der Akkumulator zumindest eine bidirektionale Akkudatenschnittstelle zum Datenaustausch. Ferner umfasst das System zumindest eine Bereitstellungseinheit, von der Betriebsprogrammdaten für die zumindest eine Steuereinheit zum Steuern und/oder Überwachen des Akkumulators und/oder des mit dem Akkumulator gekoppelten Endgeräts über die Akkudatenschnittstelle an den Akkumulator übertragen werden können.

Gattungsgemäße Akkumulatoren sind seit langem bekannt. Sie dienen beispielsweise der Energieversorgung von Elektrowerkzeugen. Dabei werden meist mehrere Akkumulatoren im Wechsel verwendet, um Unterbrechungen der Arbeit mit dem Elektrowerkzeug zu vermeiden. Die in den letzten Jahrzehnten gestiegenen Kapazitäten erlauben es, auch größere Elektrogeräte, wie beispielsweise Rasenmäher, mit Akkumulatoren zu betreiben. Meist verwenden Hersteller von Elektrogeräten Akkumulatorsysteme mit entsprechenden Ladegeräten und Akkumulatoren, deren Energieschnittstelle auf bestimmte Weise ausgeführt ist, so dass Akkumulatoren eines Herstellers in der Regel nicht mit den Elektrogeräten eines anderen Herstellers kompatibel sind. Der Kauf eines Akkumulatorsystems trägt also stark zur Kundenbindung eines Elektrogeräteherstellers bei.

Aufgabe der vorliegenden Erfindung ist es, ein sicheres und/oder flexibel einsetzbares System zum Konfigurieren eines Akkumulators zu schaffen.

Die Aufgabe wird gelöst durch ein System, ein Verfahren, einen Akkumulator und/oder dessen Verwendung mit den Merkmalen der unabhängigen Ansprüche. Vorteilhafte oder bevorzugte Ausführungen sind jeweils Gegenstand eines korrespondierenden abhängigen Anspruchs.

Vorgeschlagen wird ein System mit zumindest einem Akkumulator, vorzugsweise einem Arbeitsgeräteakkumulator, Gartengeräteakkumulator und/oder Werkzeuggeräteakkumulator, insbesondere einem IoT-Akkumulator und/oder einem IoT-Arbeitsgeräteakkumulator, IoT-Gartengeräteakkumulator und/oder IoT-Werkzeuggeräteakkumulator. Der Akkumulator kann im Folgenden auch abgekürzt als Akku bezeichnet werden. Der Akku ist ferner ein mobiler und/oder tragbarer Akku. Der Akku kann somit für Handwerksarbeiten und/oder für Gartenarbeiten eingesetzt werden. Der Akkumulator weist zumindest eine Steuereinheit zum Steuern und/oder Überwachen des Akkumulators und/oder eines mit dem Akkumulator gekoppelten Endgeräts auf. Die Steuereinheit ermöglicht eine präzise Steuerung und/oder Überwachung des Akkumulators und sorgt dadurch für eine längere Lebensdauer und optimierte Leistung des Akkumulators. Zusätzlich oder alternativ kann die Steuereinheit das mit dem Akkumulator gekoppelte Endgerät steuern. Infolgedessen kann auf eine aufwändige Steuereinheit im Endgerät verzichtet werden. Das Endgerät kann hierdurch kostengünstiger ausgebildet sein.

Weiterhin umfasst der Akkumulator zumindest eine bidirektionale Akkudatenschnittstelle zum Datenaustausch. Die Akkudatenschnittstelle gewährleistet eine effiziente und sichere Datenübertragung zwischen dem Akkumulator und externen Geräten. Mit Hilfe der bidirektionalen Akkudatenschnittstelle können Daten gesendet und empfangen werden. Somit kann eine bidirektionale Kommunikation ausgebildet werden.

Des Weiteren umfasst das System zumindest eine Bereitstellungseinheit, von der Betriebsprogrammdaten für die zumindest eine Steuereinheit zum Steuern und/oder Überwachen des Akkumulators und/oder des mit dem Akkumulator gekoppelten Endgeräts über die Akkudatenschnittstelle an den Akkumulator übertragen werden können. Die zumindest eine Bereitstellungseinheit stellt hierbei die Betriebsprogrammdaten bereit. Beispielsweise sind diese auf der Bereitstellungseinheit gespeichert oder können von der Bereitstellungseinheit oder auf der Bereitstellungseinheit erstellt werden. Die Bereitstellungseinheit kann somit eine Art Bibliothek mit verschiedenen Betriebsprogrammdaten umfassen. Dies ermöglicht eine flexible und anpassbare Konfiguration der Steuereinheit, wodurch der Akkumulator und/oder das Endgerät an verschiedene Betriebsanforderungen angepasst werden können. Die Möglichkeit, Betriebsprogrammdaten zu übertragen, ermöglicht einen flexiblen Einsatz des Akkumulators und/oder des Endgeräts.

In einer vorteilhaften Weiterbildung der Erfindung ist die zumindest eine Steuereinheit eine IoT-Steuereinheit. Dies ermöglicht die Integration des Systems in IoT-Umgebungen, wodurch eine erweiterte Vernetzung und Datennutzung ermöglicht wird. Die IoT-Steuereinheit verbessert zudem die Fernüberwachung, Fernsteuerung und/oder Fernkonfiguration des Akkumulators, was die Betriebseffizienz und Flexibilität steigert.

Des Weiteren ist es vorteilhaft, wenn der Akkumulator zumindest eine erste und eine zweite Steuereinheit umfasst. Dies ermöglicht eine klare Trennung der Funktionen. Die Aufteilung in zwei Steuereinheiten erhöht die Zuverlässigkeit und verbessert die Sicherheit, da kritische Funktionen getrennt überwacht und gesteuert werden können. Beispielsweise kann die erste Steuereinheit für den Akku zuständig sein. Die zweite Steuereinheit kann dagegen das Endgerät steuern und/oder überwachen.

In einer vorteilhaften Weiterbildung der Erfindung umfasst die zumindest eine Steuereinheit zumindest einen ersten und einen zweiten Steuerkern. Die Verwendung mehrerer Steuerkerne ermöglicht eine parallele Verarbeitung von Aufgaben. Zudem erhöht die Trennung in mehrere Steuerkerne die Ausfallsicherheit des Systems, da ein Ausfall eines Kerns nicht zwangsläufig zu einem Ausfall der gesamten Steuereinheit führt. Des Weiteren können durch die zwei Steuerkerne, wie bei den zwei Steuereinheiten, Funktionen zur Überwachung und/oder zum Steuern des Akkus und/oder des Endgeräts getrennt werden. Beispielsweise kann der erste Steuerkern den Akku und der zweite Steuerkern das Endgerät steuern und/oder überwachen.

Mit Hilfe der beiden Steuereinheiten und/oder der beiden Steuerkerne kann eine sogenannte Dual-Core-Architektur ausgebildet werden. Damit können die Funktionen auf die beiden Steuereinheiten und/oder die beiden Steuerkerne aufgeteilt werden. Alternativ dazu kann auch eine einzige Steuereinheit oder ein einziger Steuerkern vorhanden sein. In diesem Fall ist eine Single-Core-Architektur ausgebildet, was eine kostengünstigere Alternative ist.

Vorteilhafterweise ist die erste Steuereinheit und/oder der erste Steuerkern als Batteriemanagementsystem für den Akkumulator ausgebildet. Dies sorgt für eine effiziente Überwachung und/oder Steuerung der Lade- und Entladevorgänge, was die Lebensdauer des Akkumulators verlängert. Zusätzlich oder alternativ kann mit Hilfe des Batteriemanagementsystems der Akku gesteuert und/oder überwacht werden. Das Batteriemanagementsystem trägt zur Sicherheit bei, indem es Fehlfunktionen, ein thermisches Durchgehen, eine Überladung und/oder Tiefentladung verhindert.

Es ist vorteilhaft, wenn die zweite Steuereinheit und/oder der zweite Steuerkern als Endgerätemanagementsystem für das Endgerät ausgebildet ist. Dies ermöglicht eine optimierte Steuerung und/oder Überwachung des angeschlossenen Endgeräts, was die Betriebseffizienz und/oder Zuverlässigkeit des Gesamtsystems verbessert. Durch die spezialisierte Steuerung und/oder Überwachung des Endgeräts können spezifische Betriebsanforderungen besser erfüllt und/oder ausgeführt werden.

Darüber hinaus ist es vorteilhaft, wenn die erste Steuereinheit und/oder der erste Steuerkern vor einem Benutzerzugriff geschützt sind. Dies erhöht die Sicherheit des Systems, indem unbefugte Änderungen an kritischen Betriebsparametern, insbesondere zur Steuerung des Akkus, verhindert werden. Der Schutz vor unbefugtem Zugriff minimiert das Risiko von Fehlfunktionen und verlängert die Lebensdauer des Akkumulators und/oder des Endgeräts.

Es ist vorteilhaft, wenn die zumindest eine Steuereinheit und/oder der zumindest eine Steuerkern derart ausgebildet sind, dass diese anhand der Betriebsprogrammdaten eine Basisfirmware und/oder eine Individualfirmware erstellen können. Die Basisfirmware ist vorzugsweise für die erste Steuereinheit und/oder den ersten Steuerkern vorgesehen. Zusätzlich oder alternativ ist die Individualfirmware für die zweite Steuereinheit und/oder den zweiten Steuerkern vorgesehen. Die Basisfirmware dient hierbei insbesondere zum Steuern und/oder Überwachen des Akkus. Die Basisfirmware kann somit als Betriebssoftware für den Akku bezeichnet werden. Die Individualfirmware hingegen kann als Steuer- und/oder Überwachungsprogramm für das Endgerät dienen. Die Möglichkeit, eine Individualfirmware zu erstellen, erlaubt es dem Benutzer, spezifische Funktionen für das Endgerät individuell zu gestalten und an seine eigenen Anforderungen anzupassen. Dies führt zu einer erheblichen Erweiterung der Anwendungsmöglichkeiten, da jedermann in der Lage ist, durch einfache Programmierung neue Funktionen zu integrieren, ohne auf vordefinierte Standardlösungen beschränkt zu sein.

Des Weiteren ist es von Vorteil, wenn die Firmware, insbesondere die Basisfirmware und/oder die Individualfirmware, direkt von der Bereitstellungseinheit über die Akkudatenschnittstelle übertragen werden. Infolgedessen steht die Firmware unmittelbar bereit und die Firmware bzw. die Betriebsprogrammdaten müssen nicht mehr bearbeitet werden. Insbesondere kann der Schritt eingespart werden, dass auch den Betriebsprogrammdaten die Firmware erstellt wird.

Vorteilhaft ist es weiterhin, wenn die erste Steuereinheit und/oder der erste Steuerkern derart ausgebildet und/oder eingerichtet sind, dass diese mit Hilfe der Basisfirmware den Akkumulator steuern und/oder überwachen können. Durch die Steuerung und Überwachung mittels Basisfirmware wird eine zuverlässige und konsistente Leistung des Akkumulators gewährleistet. Dies trägt zur Verlängerung der Akkulebensdauer bei und sorgt für eine stabile Betriebsumgebung.

Alternativ oder zusätzlich bringt es Vorteile mit sich, wenn die zweite Steuereinheit und/oder der zweite Steuerkern derart ausgebildet und/oder eingerichtet sind, dass diese mit Hilfe der Individualfirmware das Endgerät steuern und/oder überwachen können. Die Nutzung der Individualfirmware für die Steuerung des Endgeräts ermöglicht eine präzise Anpassung an die spezifischen Anforderungen des Endgeräts, was die Gesamtleistung des Systems verbessert. Dies erhöht die Flexibilität des Systems und ermöglicht eine breite Anwendbarkeit in verschiedenen Einsatzszenarien.

Die erste Steuereinheit und/oder der erste Steuerkern dient somit zum Steuern und/oder Überwachen des Akkus. Dagegen kann die zweite Steuereinheit und/oder der zweite Steuerkern zum Steuern und/oder Überwachen des Endgeräts dienen.

Von Vorteil ist es, wenn eine Datenverbindung zwischen der ersten Steuereinheit und/oder dem ersten Steuerkern und der zweiten Steuereinheit und/oder dem zweiten Steuerkern derart ausgebildet ist, dass die zweite Steuereinheit und/oder der zweite Steuerkern ausschließlich von der ersten Steuereinheit oder vom ersten Steuerkern lesen, insbesondere nicht schreiben, kann. Dies erhöht die Sicherheit und Integrität der Daten, indem verhindert wird, dass die zweite Steuereinheit unbefugte Änderungen an der ersten Steuereinheit vornehmen kann. Die Trennung der Schreib- und Lesezugriffe minimiert das Risiko von Systemfehlern und erhöht die Stabilität des Gesamtsystems.

Es ist vorteilhaft, wenn die Basisfirmware vor der Individualfirmware vor Zugriff geschützt ist und/oder von der Individualfirmware unveränderbar ist. Hierfür kann die erste Steuereinheit und/oder der erste Steuerkern derart ausgebildet und/oder eingerichtet sein, dass die darauf angeordnete Basisfirmware geschützt ist. Dies stellt sicher, dass kritische Funktionen des Akkus nicht durch benutzerdefinierte Einstellungen beeinträchtigt werden können, was die Zuverlässigkeit und Sicherheit des Akkumulators erhöht. Der Schutz der Basisfirmware gewährleistet eine konsistente und zuverlässige Betriebsumgebung, unabhängig von Änderungen an der Individualfirmware.

Vorteilhaft ist es zudem, wenn der Akkumulator einen Datenspeicher umfasst. Der Datenspeicher kann einen geschützten Bereich umfassen, der vorzugsweise ausschließlich der ersten Steuereinheit und/oder dem ersten Steuerkern zugeordnet ist. Ein geschützter Datenspeicherbereich ermöglicht eine sichere Speicherung sensibler Daten, was die Sicherheit und Vertraulichkeit des Systems erhöht. Auf diesem geschützten Datenspeicherbereich kann beispielsweise die Basisfirmware gespeichert sein. Dies verhindert unbefugte Zugriffe auf kritische Betriebsdaten und trägt zur Integrität der Systemsteuerung bei.

Vorteilhafterweise umfasst die zumindest eine Bereitstellungseinheit eine Cloud, eine Serverinfrastruktur, ein Smartphone, einen PC und/oder einen Laptop. Die Nutzung einer Cloud oder mobiler Geräte ermöglicht einen einfachen und ortsunabhängigen Zugriff auf die Betriebsprogrammdaten, was die Flexibilität bei der Systemkonfiguration erhöht. Dies fördert auch die Vernetzung des Systems und erleichtert die Integration in bestehende IT-Infrastrukturen.

Es ist vorteilhaft, wenn die zumindest eine Bereitstellungseinheit eine, insbesondere grafische, Benutzeroberfläche und/oder eine, insbesondere grafische, Programmiersoftware umfasst, mittels der die Betriebsprogrammdaten und/oder die Firmware, insbesondere die Basisfirmware und/oder die Individualfirmware, erstellt und/oder an den Akkumulator übertragen werden können. Eine grafische Benutzeroberfläche erleichtert die Erstellung und/oder Übertragung von Betriebsprogrammdaten und/oder der Firmware, was die Benutzerfreundlichkeit des Systems erhöht. Dies ermöglicht eine intuitive Bedienung und verkürzt die Einarbeitungszeit für neue Benutzer. Bei der Erstellung der Firmware kann diese nach der Übermittlung direkt installiert werden, um die Betriebssoftware bzw. die alte Firmware zu aktualisieren. Eine weitere Bearbeitung der Betriebsprogrammdaten auf seitens des Akkus kann somit eingespart werden.

Vorteilhaft ist es ebenso, wenn die Betriebsprogrammdaten über das Internet übertragen werden können. Die Möglichkeit der Datenübertragung über das Internet erhöht die Flexibilität und ermöglicht eine Fernkonfiguration und -wartung des Systems. Dies minimiert den Aufwand für physische Wartung und reduziert die Betriebskosten. Zusätzlich oder alternativ können die Betriebsprogrammdaten auch über einen Nahfunkstandart übertragen werden, wenn die Betriebsprogrammdaten beispielsweise von einem Smartphone und aus unmittelbarer Umgebung zum Akku übertragen werden.

Vorteilhafterweise umfasst der Akkumulator zumindest eine Nahfunkschnittstelle zur Nahbereichskommunikation und/oder eine Fernfunkschnittstelle zur Fernbereichskommunikation, wobei die zumindest eine Akkudatenschnittstelle vorzugsweise die Nahfunkschnittstelle und/oder Fernfunkschnittstelle umfasst. Die Integration von Nah- und/oder Fernfunkschnittstellen ermöglicht eine vielseitige Kommunikationsfähigkeit des Akkumulators, was die Anpassungsfähigkeit an unterschiedliche Umgebungen und Anwendungen erhöht. Dies verbessert auch die Konnektivität und erleichtert die Integration des Akkumulators in verschiedene Netzwerke.

Des Weiteren ist es vorteilhaft, wenn die Fernfunkschnittstelle als Sigfox, LoRaWAN, 5G, 4G, 3G, 2G, LTE-CAT M, Satellitenkommunikation, LTE-M, DASH7, WiFi, HAPS-Mobilfunkstandard, NB-IoT, WiMAX und/oder eine Satellitenverbindung ausgebildet ist. Diese Funkstandards gewährleisten eine flexible Fernfunkkommunikation.

Vorteilhafterweise ist die Nahfunkschnittstelle als Bluetooth, Wi-Fi, Zigbee, NFC, Z-Wave, Infrarot, Thread, Ultra-Wideband, Bluetooth Low Energy, ANT+, Wi-Fi Direct und/oder RFID ausgebildet. Durch die Verwendung dieser Nahfunktechnologien wird eine robuste und energieeffiziente Kommunikation mit nahegelegenen Geräten ermöglicht. Dies trägt zur Reduzierung des Energieverbrauchs und zur Verlängerung der Ackulaufzeit bei. Zudem ermöglichen diese Technologien eine einfache und schnelle Integration in bestehende Heim- und Gebäudenetzwerke, was den Benutzerkomfort steigert.

Es ist vorteilhaft, wenn der Akkumulator einen Koppelbereich umfasst, mittels dem das Endgerät und/oder eine externe Energiequelle mit dem Akkumulator lösbar gekoppelt werden können, wobei der Koppelbereich vorzugsweise Kontaktelemente umfasst. Ein Koppelbereich ermöglicht eine sichere und zuverlässige Verbindung zwischen dem Ackumulator und Endgerät oder Energiequelle, was die Betriebssicherheit erhöht. Die Verwendung von Kontaktelementen sorgt für eine stabile elektrische Verbindung, was die Effizienz der Energieübertragung verbessert.

Vorteilhafterweise umfasst der Akkumulator zumindest eine Erfassungseinheit zum Erfassen von Akkumulatorparametern und/oder Statusinformationen des Akkumulators. Zusätzlich oder alternativ kann die Erfassungseinheit auch Statusinformationen des Endgeräts erfassen. Die Erfassungseinheit ermöglicht eine kontinuierliche Überwachung des Akkumulators und/oder des Endgeräts, was die Vorhersage von Wartungsbedarfe und die Vermeidung von Ausfällen erleichtert. Dies trägt zur Verlängerung der Lebensdauer des Akkumulators und/oder des Endgeräts bei und erhöht die Zuverlässigkeit des Gesamtsystems.

Es ist vorteilhaft, wenn die zumindest eine Steuereinheit ein Mikrocontroller und/oder ein integrierter Schaltkreis ist und/oder derart ausgebildet ist. Ein Mikrocontroller oder integrierter Schaltkreis bietet eine kompakte und energieeffiziente Lösung für die Steuerung des Akkumulators, was den Platzbedarf reduziert und die Batterielaufzeit verlängert. Dies verbessert auch die Zuverlässigkeit des Systems durch die Integration aller Steuerungsfunktionen in einem einzigen Bauelement.

Vorgeschlagen wird ferner ein Verfahren zum Konfigurieren eines Akkumulators. Der Akkumulator und/oder das System, das zum Konfigurieren des Akkumulators verwendet wird, weisen hierbei zumindest ein Merkmal der vorangegangenen und/oder nachfolgenden Beschreibung auf. Des Weiteren kann das Verfahren einen oder mehrere Verfahrensschritte der vorangegangenen und/oder nachfolgenden Beschreibung aufweisen, auch wenn diese im Zusammenhang mit körperlichen Merkmalen beschrieben sind.

Beim Konfigurationsverfahren werden Betriebsprogrammdaten von zumindest einer Bereitstellungseinheit eines Systems für die Steuereinheit zum Steuern und/oder Überwachen des Akkumulators und/oder des mit dem Akkumulator gekoppelten Endgeräts über die Akkudatenschnittstelle an den Akkumulator übertragen. Das Verfahren ermöglicht eine flexible und bedarfsgerechte Anpassung der Software des Akkumulators an spezifische Anforderungen, was die Vielseitigkeit und Einsatzmöglichkeiten des Systems erhöht. Die Akkudatenschnittstelle ist hierbei eine bidirektionale Akkudatenschnittstelle, so dass diese Daten empfangen und senden kann. Mittels der bidirektionalen Ackudatenschnittstelle kann somit eine bidirektionale Kommunikation ausgebildet werden.

Ferner ist es von Vorteil, wenn aus den Betriebsprogrammdaten eine Basisfirmware für die erste Steuereinheit und/oder den ersten Steuerkern und/oder eine Individualfirmware für die zweite Steuereinheit und/oder den zweiten Steuerkern erstellt wird. Die Erstellung spezifischer Firmware-Versionen für unterschiedliche Steuereinheiten ermöglicht eine präzise Steuerung und Anpassung der einzelnen Systemkomponenten, nämlich des Akkus und/oder des Endgeräts. Dies trägt zur Verbesserung der Systemstabilität und -effizienz bei. Insbesondere die Möglichkeit, die Individualfirmware selbst zu erstellen, erlaubt es Anwendern, ihre spezifischen Anforderungen direkt umzusetzen und die Funktionalität des Akkumulators und die Steuerung des Endgeräts nach eigenen Wünschen anzupassen. Diese Flexibilität unterstützt auch die Entwicklung neuer Anwendungen und Funktionen, die weit über den ursprünglichen Zweck des Akkumulators hinausgehen könnten, was eine erhebliche Erweiterung der Anwendungsbereiche ermöglicht.

Vorteilhafterweise kann die zumindest eine Steuereinheit und/oder der zumindest eine Steuerkern eine Basisfirmware und/oder eine Individualfirmware aktualisieren. Die Möglichkeit zur Firmware-Aktualisierung ermöglicht es, das System auf dem neuesten Stand zu halten und kontinuierlich zu verbessern. Dies ermöglicht eine schnelle Implementierung neuer Funktionen.

Es ist vorteilhaft, wenn zur Konfiguration des Akkumulators die Betriebsprogrammdaten, vorzugsweise manuell, mittels der Bereitstellungseinheit erstellt werden. Die manuelle Erstellung der Betriebsprogrammdaten ermöglicht eine gezielte und präzise Anpassung an spezifische Anforderungen, was die Flexibilität erhöht. Es können spezifische Betriebsprogrammdaten erstellt werden, aus denen die Individualfirmware erstellt werden kann. Zusätzlich oder alternativ ist es auch möglich, dass die Bereitstellungseinheit selbst die Basisfirmware und/oder die Individualfirmware erstellt, so dass diese als Betriebsprogrammdaten an den Akku übermittelt werden. Insgesamt fördert dies die Benutzerfreundlichkeit, da die Konfiguration an individuelle Bedürfnisse angepasst werden kann.

Vorteilhafterweise werden die Betriebsprogrammdaten mittels einer grafischen Benutzeroberfläche der Bereitstellungseinheit erstellt. Eine grafische Benutzeroberfläche erleichtert die Erstellung und Anpassung der Betriebsprogrammdaten, was die Effizienz und Genauigkeit des Konfigurationsprozesses erhöht. Dies trägt auch zur Verbesserung der Benutzererfahrung bei, indem die Komplexität der Datenverwaltung reduziert wird.

Es ist vorteilhaft, wenn die zumindest eine Steuereinheit und/oder der zumindest eine Steuerkern derart ausgebildet sind, dass diese automatisch nach den Betriebsprogrammdaten suchen und/oder diese beziehen können. Die automatische Suche und das Beziehen der Betriebsprogrammdaten ermöglichen eine schnellere und effizientere Systemkonfiguration, was die Inbetriebnahmezeit und/oder eine Aktualisierung erleichtert und/oder verkürzt.

Vorgeschlagen wird außerdem ein Akkumulator für ein System. Der Akkumulator und/oder das System weisen ein oder mehrere Merkmale der vorangegangenen und/oder nachfolgenden Beschreibung auf, wobei die genannten Merkmale einzeln oder in beliebiger Kombination vorhanden sein können. Der Akkumulator bietet eine vielseitige und anpassbare Lösung für unterschiedliche Anwendungen, was die Einsatzmöglichkeiten des Systems erweitert. Die Kombination der beschriebenen Merkmale sorgt für eine hohe Leistungsfähigkeit und/oder Zuverlässigkeit des Akkumulators.

Vorgeschlagen wird auch die Verwendung eines Akkumulators für ein System und/oder ein Verfahren gemäß einem oder mehreren Merkmalen der vorangegangenen und/oder nachfolgenden Beschreibung.

Insbesondere ist es ein Vorteil, dass der Benutzer die Betriebsprogrammdaten selbst programmieren kann, um die Funktionen des Akkumulators und/oder des Endgeräts individuell anzupassen. Dies eröffnet vielfältige Möglichkeiten, da der Benutzer spezielle Funktionen, wie etwa optimierte Ladeprofile, individuelle Energiesparmodi oder maßgeschneiderte Sicherheitsfunktionen, integrieren kann. Zusätzlich oder alternativ kann der Benutzer auch spezielle Funktionen zum Steuern des Endgeräts erstellen. Der Akkumulator wird somit zu einem hochgradig anpassbaren Element, so dass Funktionen für den Akku und/oder das Endgerät auf die Bedürfnisse des Nutzers zugeschnitten werden können.

Darüber hinaus können die Betriebsprogrammdaten nicht nur zur Steuerung des Akkumulators, sondern auch zur Steuerung des damit verbundenen Endgeräts verwendet werden. Dies erweitert die Funktionalität des Systems bzw. des Endgeräts, da der Benutzer individuelle Funktionen für das Endgerät programmieren kann, wie etwa spezielle Leistungsmodi, Einschalt- und/oder Abschaltkriterien. Der Akkumulator übernimmt dann die Steuerung des Endgeräts, basierend auf den spezifischen Vorgaben des Nutzers.

Ein weiterer Vorteil liegt in der Basisfirmware und/oder Individualfirmware. Die Basisfirmware sorgt für eine stabile und zuverlässige Grundfunktionalität des Akkumulators, während die Individualfirmware dem Benutzer die Möglichkeit bietet, zusätzliche, spezifisch auf seine Bedürfnisse abgestimmte, Funktionen zum Betrieb des Endgeräts hinzuzufügen. Diese Trennung gewährleistet, dass die Kernfunktionen des Akkumulators stets geschützt und stabil bleiben, während gleichzeitig eine hohe Flexibilität erhalten bleibt, um den Akku an spezifische Anforderungen, insbesondere zum Steuern des Endgeräts, anzupassen.

Der geschützte Bereich für die Basisfirmware verhindert zudem unbefugte Zugriffe und Manipulationen, was die Sicherheit und Stabilität des Systems weiter erhöht. Gleichzeitig können sowohl die Basisfirmware als auch die Individualfirmware flexibel aktualisiert werden, so dass das System kontinuierlich an neue Anforderungen und technologische Entwicklungen angepasst werden kann.

Um die Programmierung und Konfiguration der Betriebsprogrammdaten auch für technisch weniger versierte Benutzer zugänglich zu machen, bietet das System eine grafische Benutzeroberfläche. Diese erleichtert es, die Betriebsprogrammdaten zu erstellen und an den Akkumulator zu übertragen, wodurch die Bedienbarkeit des Systems weiter verbessert wird. Insgesamt bietet die Lösung dem Benutzer eine hohe Flexibilität und Kontrolle über die Funktionen des Akkumulators und des angeschlossenen Endgeräts.

Weitere Vorteile der Erfindung sind in den nachfolgenden Ausführungsbeispielen beschrieben. Es zeigen:
- **Figur 1**: eine schematische Ansicht des Systems mit Akkumulator, Bereitstellungseinheiten und Betriebsprogrammdaten,
- **Figur 2**: eine perspektivische Ansicht des Akkumulators,
- **Figur 3**: eine schematische Ansicht des Akkus mit zwei Steuereinheiten,
- **Figur 4**: eine schematische Ansicht des Akkus mit zwei Steuerkernen und
- **Figur 5**: eine schematische Ansicht des Akkus mit mehreren funktionellen Einheiten.

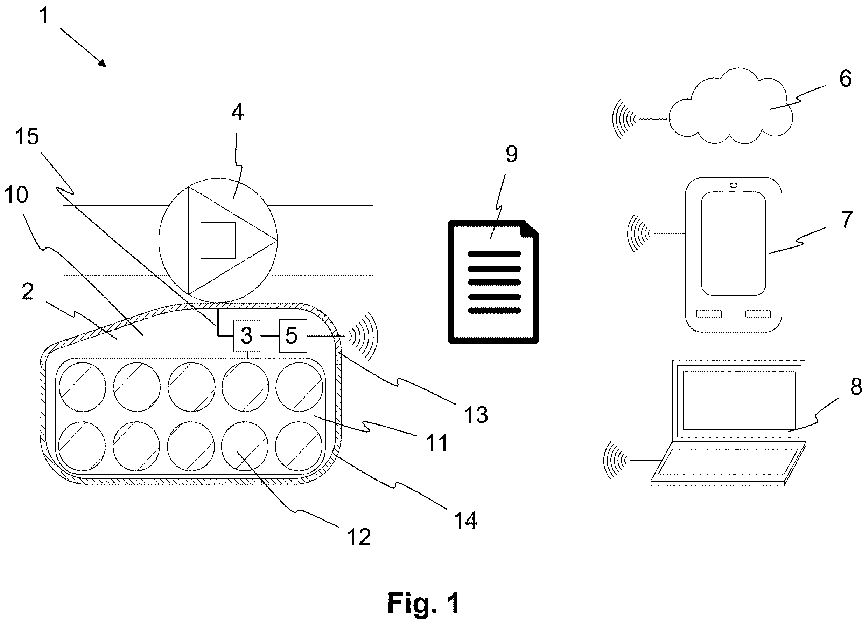

Das in Figur 1 dargestellte Ausführungsbeispiel zeigt ein System 1, das einen Akkumulator 2 umfasst. Der Akkumulator 2 kann ein Arbeitsgeräteakkumulator sein. Zusätzlich oder alternativ kann der Akkumulator 2 ein IoT-Akkumulator sein. Des Weiteren kann der Akkumulator 2 mit Akku abgekürzt werden.

Der Akkumulator 2 weist zumindest eine erste Steuereinheit 3 auf, welche zur Steuerung und/oder Überwachung des Akkumulators 2 und/oder eines mit dem Akkumulator 2 gekoppelten Endgeräts 4 dient. Der Vorteil dieser ersten Steuereinheit 3 liegt in ihrer Fähigkeit, spezifische Betriebsprogrammdaten 9 zu verarbeiten, die direkt auf die Bedürfnisse und Präferenzen des Benutzers abgestimmt sind. Das Endgerät 4 ist in diesem Ausführungsbeispiel als eine Pumpe ausgebildet, was ein Beispiel eines Arbeitsgeräts darstellt.

Wie aus dem Ausführungsbeispiel der Figur 1 hervorgeht, kann das Endgerät 4 mit der ersten Steuereinheit 3 in Verbindung stehen. Infolgedessen kann die erste Steuereinheit 3 zusätzlich oder alternativ zum Akku 2 das Endgerät 4 steuern und/oder überwachen.

Zusätzlich umfasst der Akku 2 zumindest eine Akkudatenschnittstelle 5, die dem bidirektionalen Datenaustausch zwischen dem Akkumulator 2 und externen Geräten dient. Diese Akkudatenschnittstelle 5 ermöglicht es, Betriebsprogrammdaten 9, beispielsweise eine Firmware, an die erste Steuereinheit 3 zu übermitteln, mittels denen der Akkumulator 2 und/oder das gekoppelte Endgerät 4 gesteuert und/oder überwacht werden können. Mit der Akkudatenschnittstelle 5 ist eine nahtlose und effiziente Übertragung von Betriebsprogrammdaten 9 möglich, was eine schnelle Anpassung und/oder Aktualisierung der Funktionen des Akkus 2 und/oder des Endgeräts 4 gewährleistet. Die Betriebsprogrammdaten 9 können hierbei selbst eine Software bzw. eine Betriebssoftware bzw. die Firmware für den Akku 2 zum Steuern und/oder Überwachen des Akkus 2 und/oder des Endgeräts 4 umfassen. Zusätzlich oder alternativ können aus Betriebsprogrammdaten 9 auch die Software bzw. die Betriebssoftware für den Akku 2 zum Steuern und/oder Überwachen des Akkus 2 und/oder des Endgeräts 4 generiert werden.

Gemäß Figur 1 werden die Betriebsprogrammdaten 9 von zumindest einer Bereitstellungseinheit 6, 7, 8 an die erste Steuereinheit 3 über die Akkudatenschnittstelle 5 übertragen. Die Bereitstellungseinheit 6, 7, 8 kann hierbei die Betriebsprogrammdaten 9 bereitstellen.

Der Vorteil dieser Übertragung besteht darin, dass die Betriebsprogrammdaten 9, beispielsweise die neue bzw. aktualisierte Firmware, von einer zentralen Stelle, nämlich der Bereitstellungseinheit 6, 7, 8, bezogen werden. Dort kann eine Art Bibliothek mit den verschiedensten Betriebsprogrammdaten 9 vorhanden sein. Zusätzlich oder alternativ können mit Hilfe der zumindest einen Bereitstellungseinheit 6, 7, 8 vorhandene Betriebsprogrammdaten 9 programmiert und/oder bereits bestehende Betriebsprogrammdaten 9 umprogrammiert werden. Dadurch können die Betriebsprogrammdaten 9 vom Benutzer selbst erstellt und angepasst werden. Dies erlaubt es dem Benutzer, den Akku 2 nach seinen spezifischen Anforderungen zu konfigurieren. Die individuell erstellten Betriebsprogrammdaten 9 oder die aus einer Bibliothek entnommenen Betriebsprogrammdaten 9 können hierbei von der zumindest einen Steuereinheit 3, 24 ausgeführt werden, um den Akku 2 und/oder das Endgerät 4 nach spezifischen Wünschen zu steuern. Beispielsweise kann der Benutzer einstellen, dass das Endgerät 4 nur zu bestimmten Uhrzeiten und/oder für eine maximale Betriebszeit verwendet werden kann. Außerhalb dieser eingestellten Uhrzeit kann das Endgerät 4 nicht verwendet werden. Zusätzlich oder alternativ kann mit den Betriebsprogrammdaten 9 das Endgerät 4 derart gesteuert werden, dass es bei einem zu hohen elektrischen Strom, der vom Akku 2 geliefert wird, abgeschalten wird, um beispielsweise Beschädigungen zu verhindern. Mit Hilfe der von der Bereitstellungseinheit 6, 7, 8 bereitgestellten Betriebsprogrammdaten 9 kann eine individuelle Steuerung und/oder Überwachung des Endgeräts 4 und/oder des Akkus 2 ermöglicht werden. Die Betriebsprogrammdaten 9 können hierbei bereits fertig programmiert sein oder der Benutzer kann sich selbst die Betriebsprogrammdaten 9 programmieren oder vorhandene Betriebsprogrammdaten 9 umprogrammieren.

Wie in Figur 1 dargestellt, kann die Bereitstellungseinheit 6, 7, 8 verschiedene Formen annehmen, darunter eine Cloud 6, ein Smartphone 7 und/oder ein Laptop 8. Diese Geräte fungieren als Schnittstellen zur Übertragung und möglicherweise auch zur Erstellung der Betriebsprogrammdaten 9, die für die Konfiguration des Akkumulators 2 bzw. zum Steuern und/oder Überwachen des Akkus 2 und/oder des Endgeräts 4 benötigt werden. Ein Vorteil dieser Vielfalt an Bereitstellungseinheiten 6, 7, 8 besteht darin, dass der Benutzer flexibel entscheiden kann, welches Gerät er zur Erstellung und Übertragung der Betriebsprogrammdaten 9 nutzen möchte. Dies könnte bedeuten, dass der Benutzer die Betriebsprogrammdaten 9 unterwegs mit seinem Smartphone 7 anpassen kann oder zu Hause am Laptop 8 detailliertere Einstellungen vornimmt. Die Möglichkeit, Betriebsprogrammdaten 9 in einer Cloud 6 zu speichern, bietet zusätzliche Sicherheit und die Möglichkeit, von verschiedenen Geräten aus auf diese Daten zuzugreifen.

Wie die Figur 1 weiterhin zeigt, umfasst der Akku 2 einen Innenraum 10, der durch eine erste Gehäusehälfte 13 und eine zweite Gehäusehälfte 14 geschützt wird. Diese Gehäusehälften 13, 14 umschließen den Innenraum 10 und zumindest eine darin angeordnete Energiespeichereinheit 11, die in diesem Ausführungsbeispiel mehrere Einzelzellen 12 umfasst. Durch die Gehäusehälften 13, 14 sind die sensiblen elektronischen Komponenten vor äußeren Einflüssen geschützt.

Des Weiteren ist hier noch eine Leitung 15 mit einem Bezugszeichen versehen. Die Leitung 15 verbindet hierbei alle Komponenten des Akkus 2. Dabei können auch mehrere Leitungen 15 vorhanden sein, die beispielsweise und vorzugsweise auf einer Platine angeordnet und/oder als elektrische Drähte ausgebildet sein können.

Merkmale, welche bereits in der zumindest einen vorgegangenen Figur beschrieben sind, können der Einfachheit halber nicht nochmals erklärt werden. Ferner können Merkmale auch erst in dieser oder in zumindest einer der nachfolgenden Figuren beschrieben werden. Des Weiteren werden der Einfachheit halber für gleiche Merkmale gleiche Bezugszeichen verwendet. Außerdem können der Übersichtlichkeit halber nicht mehr alle Merkmale in den folgenden Figuren gezeigt und/oder mit einem Bezugszeichen versehen sein. Es können jedoch in einer oder mehreren der vorangegangenen Figuren gezeigte Merkmale auch in dieser oder in einer oder mehreren der nachfolgenden Figuren vorhanden sein. Ferner können der Übersichtlichkeit halber Merkmale auch erst in dieser oder in einer oder mehreren der nachfolgenden Figuren gezeigt und/oder mit einem Bezugszeichen versehen sein. Nichtsdestotrotz können Merkmale, welche erst in einer oder mehreren der nachfolgenden Figuren gezeigt sind, auch bereits in dieser oder einer vorangegangenen Figur vorhanden sein.

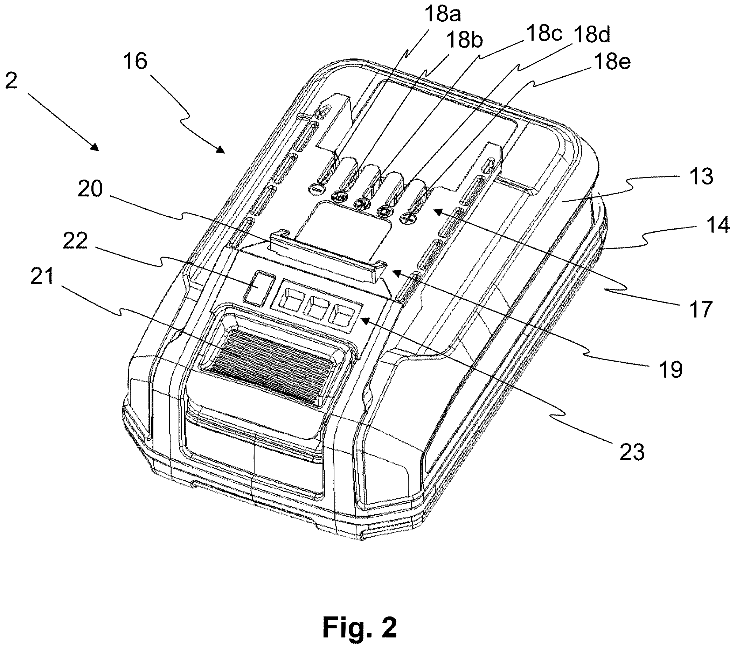

Figur 2 zeigt eine perspektivische Ansicht des Akkumulators 2, insbesondere eines Arbeitsgeräteakkumulators, der Teil des in Figur 1 gezeigten Systems 1 ist. Wie aus Figur 2 hervorgeht, umfasst der Akkumulator 2 eine erste Gehäusehälfte 13 und eine zweite Gehäusehälfte 14, welche den Innenraum 10 des Akkumulators 2 umschließen. Der Vorteil dieser Gehäusehälften 13, 14 liegt in ihrer robusten Bauweise, die den Akkumulator 2 vor äußeren Einflüssen schützt und eine lange Lebensdauer sicherstellt.

Innerhalb des Innenraums 10 sind mehrere Einzelzellen 12 angeordnet, die die Energiespeichereinheit 11 bilden. Diese Einzelzellen 12 sind so angeordnet, dass eine effiziente Speicherung und Abgabe der Energie gewährleistet ist.

Der Akku 2 umfasst ferner Kontaktelemente 18a bis 18e, die in einem Kontaktbereich 17 und/oder Koppelbereich 16 des Akkumulators 2 angeordnet sind. Dieser Kontaktbereich 17 dient dazu, den Akkumulator 2 mit einem Endgerät 4 oder einem Ladegerät zu verbinden. Die vorteilhafte Anordnung der Kontaktelemente 18a bis 18e gewährleistet eine zuverlässige elektrische Verbindung und minimiert Kontaktverluste, was die Effizienz des Energieaustauschs verbessert.

Zusätzlich ist der Akkumulator 2 mit einem Koppelbereich 16 ausgestattet, der das sichere und stabile Verbinden des Akkumulators 2 mit dem Endgerät 4 ermöglicht. Der Koppelbereich 16 sorgt dafür, dass der Akkumulator 2 fest mit dem Endgerät 4 verbunden bleibt, was insbesondere bei mobilen Anwendungen von Vorteil ist, bei denen Erschütterungen und Bewegungen auftreten können.

Wie in Figur 2 dargestellt, umfasst der Akkumulator 2 weiterhin einen Fixiermechanismus 19, der hier im Bereich der zweiten Gehäusehälfte 14 angeordnet ist. Dieser Fixiermechanismus 19 dient dazu, den Akku 2 fest mit dem Endgerät 4 und/oder dem Ladegerät zu koppeln. Der Fixiermechanismus 19 umfasst ein Fixierelement 20, welches die Verbindung zum Endgerät 4 und/oder dem Ladegerät ausbildet. Des Weiteren kann der Fixiermechanismus 10 ein Betätigungselement 21 umfassen, mittels dem der Fixiermechanismus 10 gelöst werden kann, um den Akku 2 vom Endgerät 4 oder vom Ladegerät zu lösen.

Weiterhin ist in Figur 2 eine Anzeige 23 dargestellt. Diese Anzeige 23 bietet dem Benutzer Informationen über den aktuellen Ladezustand des Akkumulators 2 sowie über andere wichtige Betriebsparameter. Der Vorteil der Anzeige 23 besteht darin, dass der Benutzer jederzeit den Zustand des Akkumulators 2 überwachen und bei Bedarf entsprechende Maßnahmen ergreifen kann, was zu einer optimalen Nutzung und einer längeren Lebensdauer des Akkus 2 beiträgt. Des Weiteren umfasst der Akku 2 eine Taste 22, mittels der die Anzeige 23 aktiviert werden kann. Die Anzeige 23 kann sich nach einer bestimmten Zeitdauer wieder deaktivieren, um Energie zu sparen.

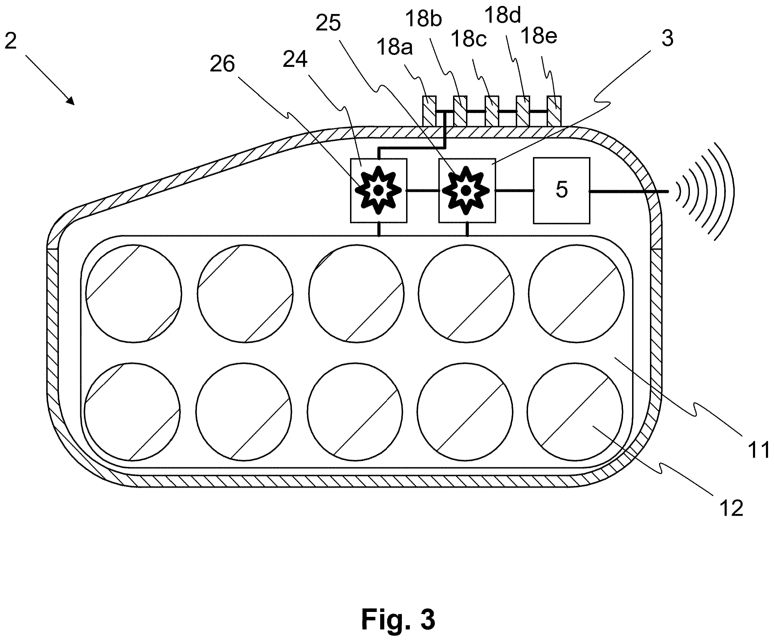

Figur 3 zeigt den Akkumulator 2, welcher eine erste Steuereinheit 3 und eine zweite Steuereinheit 24 umfasst. Die erste Steuereinheit 3 kann hier als Batteriemanagementsystem für den Akkumulator 2 dienen, wodurch eine präzise Steuerung und/oder Überwachung des Akkumulators 2 ermöglicht wird. Der Vorteil dieser Anordnung liegt in der optimierten Verwaltung der Akkuleistung und der Erhöhung der Lebensdauer des Akkumulators 2. Zusätzlich kann die erste Steuereinheit 3 vor einem Benutzerzugriff geschützt sein, was die Sicherheit und/oder Integrität des Batteriemanagementsystems erhöht und unbefugte Eingriffe verhindert.

Die zweite Steuereinheit 24 übernimmt die Funktion des Endgerätemanagementsystems für das an den Akku 2 angekoppelte Endgerät 4. Der Vorteil der zweiten Steuereinheit 24 besteht darin, dass sie die Betriebsparameter des Endgeräts 4 individuell anpassen kann. In diesem Ausführungsbeispiel der Figur 3 ist somit beschrieben, dass zwei Steuereinheiten 3, 24 vorhanden sind, wobei die erste Steuereinheit 3 den Akku 2 steuert und/oder überwacht und die zweite Steuereinheit 24 das Endgerät 4 steuert und/oder überwacht. Dies erhöht die Sicherheit und die Flexibilität bei der Steuerung und/oder Überwachung des Akkus 2 und/oder des Endgeräts 4. Hierbei kann mit Hilfe der Betriebsprogrammdaten 9 die Steuerung und/oder Überwachung des Endgeräts 4 unabhängig vom Akku 2 angepasst werden. Hierzu muss die Software für die zweite Steuereinheit 24 angepasst werden. Die Software bzw. die Firmware der ersten Steuereinheit 3 kann hierbei unverändert bleiben.

Wie bereits vorher beschrieben wurde, umfasst der Akkumulator 2 zudem die Akkudatenschnittstelle 5, die den Datenaustausch mit externen Geräten ermöglicht. Mit Hilfe der Akkudatenschnittstelle 5 werden die Betriebsprogrammdaten 9 übertragen, die als Grundlage für die Erstellung und Aktualisierung von Firmware dienen.

In Figur 3 sind außerdem die mehreren Kontaktelemente 18a bis 18e dargestellt, die für die elektrische Verbindung und/oder eine Datenverbindung des Akkumulators 2 mit dem Endgerät 4 oder einem Ladegerät sorgen. Diese Kontaktelemente 18a bis 18e sind so ausgeführt, dass eine zuverlässige Daten- und Energieübertragung sichergestellt wird.

Darüber hinaus zeigt Figur 3, dass eine Basisfirmware 25 und/oder eine Individualfirmware 26 auf den beiden Steuereinheiten 3, 24 angeordnet sind. Die Basisfirmware 25 ist für die Steuerung und/oder Überwachung des Akkumulators 2 verantwortlich, während die Individualfirmware 26 speziell auf die Anforderungen des Endgeräts 4 zugeschnitten ist. Hierbei steuert die Basisfirmware 25 die erste Steuereinheit 3 bzw. es wird die Basisfirmware 25 von der ersten Steuereinheit 3 ausgeführt. Ferner steuert die Individualfirmware 26 die zweite Steuereinheit 24 bzw. es wird die Individualfirmware 26 von der zweiten Steuereinheit 24 ausgeführt. Ein wesentlicher Vorteil dieser Aufteilung liegt in der Trennung der beiden Funktionalitäten, wodurch eine höhere Flexibilität bei der Anpassung, eine höhere Sicherheit und eine bessere Kontrolle über die jeweiligen Systeme gewährleistet wird.

Die Basisfirmware 25 und/oder die Individualfirmware 26 können hierbei von der ersten und/oder von der zweiten Steuereinheit 3, 24 erstellt werden. Des Weiteren ist es möglich, dass jede Steuereinheit 3, 24 ihre eigene Firmware 25, 26, nämlich die Basisfirmware 25 und die Individualfirmware 26, selbst erstellt. Die Basisfirmware 25 und/oder die Individualfirmware 26 werden hierbei aus den Betriebsprogrammdaten 9 erstellt. Zusätzlich oder alternativ können die Basisfirmware 25 und/oder die Individualfirmware 26 bereits in den Betriebsprogrammdaten 9 enthalten sein. Infolgedessen müssen die Steuereinheiten 3, 24 diese nicht mehr selbst erstellen. Des Weiteren können die Basisfirmware 25 und die Individualfirmware 26 von einer der beiden Steuereinheiten 3, 24, beispielsweise der ersten Steuereinheit 3, erstellt werden.

Die in Figur 3 gezeigte Anordnung der Steuereinheiten 3, 24 ermöglicht es auch, dass die zweite Steuereinheit 24 ausschließlich von der ersten Steuereinheit 3 lesen kann, jedoch keinen Schreibzugriff auf diese hat. Dies schützt die Basisfirmware 25 vor unerwünschten Veränderungen und gewährleistet, dass die grundlegenden Funktionen des Akkumulators 2 stets korrekt ausgeführt werden. Die Sicherheit und Stabilität des Systems wird durch diese Maßnahme erheblich gesteigert.

Die beiden Steuereinheiten 3, 24 können zwei Einheiten, nämlich beispielsweise zwei Computerchips, oder ähnliches sein. Die beiden Steuereinheiten 3, 24 können ferner auf einer gemeinsamen Platine angeordnet sein.

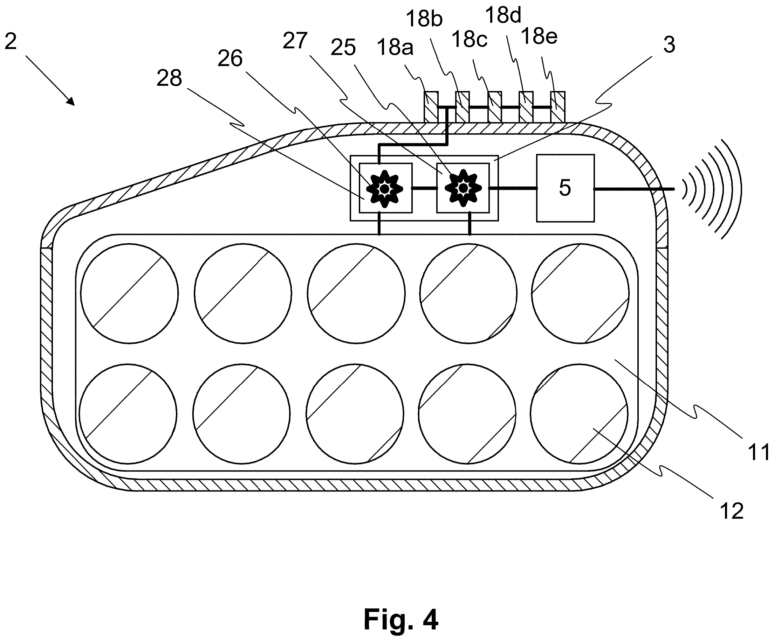

Das in Figur 4 dargestellte Ausführungsbeispiel zeigt eine weitere Ausführung des Ackumulators 2. In dieser Variante umfasst die zumindest eine erste Steuereinheit 3 zwei Steuerkerne 27 und 28, die jeweils spezifische Funktionen übernehmen. Der Vorteil dieser Ausgestaltung liegt in der erweiterten Funktionalität und Flexibilität des Akkumulators 2, da die Aufteilung der Aufgaben auf zwei Steuerkerne 27, 28 eine effizientere Verarbeitung und Steuerung ermöglicht. Die beiden Steuerkerne 27, 28 können hierbei in der ersten und/oder zweiten Steuereinheit 3, 24 angeordnet sein. Die Steuerkerne 27, 28 können durch Mehrkerncomputerchips, insbesondere 2-Kern-Chips, ausgebildet sein.

Der erste Steuerkern 27, wie aus Figur 4 hervorgeht, ist für das Batteriemanagementsystem des Akkumulators 2 verantwortlich. Dies umfasst die Steuerung und/oder Überwachung des Akkus 2 und/oder der Energiespeichereinheit 11. Der Vorteil des ersten Steuerkerns 27 liegt darin, dass er durch die ihm zugewiesene Basisfirmware 25 optimal auf die Verwaltung der Akku-Ressourcen abgestimmt ist, was zu einer verbesserten Akkulaufzeit, höheren Sicherheit und/oder einer längeren Lebensdauer des Akkumulators 2 führt.

Der zweite Steuerkern 28 hingegen ist, wie aus dem in Figur 4 dargestellten Ausführungsbeispiel hervorgeht, als Endgerätemanagementsystem für ein angeschlossenes Endgerät 4 ausgelegt. Dieser Steuerkern 28 ist in der Lage, individuelle Funktionen des Endgeräts 4 zu steuern, die durch die spezielle Individualfirmware 26 definiert werden. Der Vorteil dieser Anordnung liegt in der Möglichkeit, das Endgerät 4 an die spezifischen Bedürfnisse des Benutzers anzupassen, indem beispielsweise benutzerdefinierte Energiesparmodi und/oder Leistungseinstellungen programmiert werden, die durch den Akkumulator 2 gesteuert werden.

Wie aus Figur 4 hervorgeht, sind sowohl die Basisfirmware 25 als auch die Individualfirmware 26 in den jeweiligen Steuerkernen 27, 28 integriert. Diese Trennung der Firmware 25, 26 stellt sicher, dass jede Firmware 25, 26 ihre spezifischen Aufgaben effizient erfüllen kann, ohne dass es zu Konflikten zwischen den verschiedenen Steuerungen kommt. Des Weiteren ist es möglich, dass die Individualfirmware 26 keine Änderungen an der Basisfirmware 25 vornehmen kann, wodurch die Stabilität und Sicherheit des Systems 1 erhöht wird.

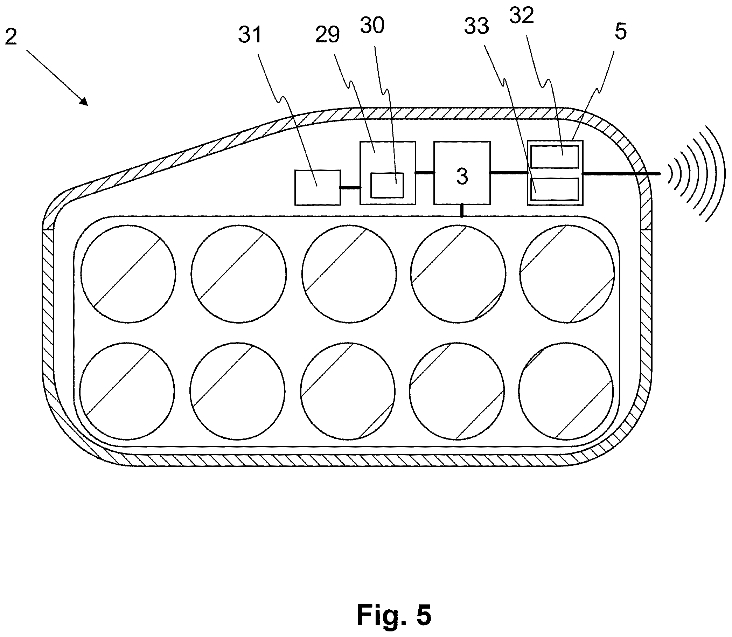

Das in Figur 5 dargestellte Ausführungsbeispiel zeigt den Akkumulator 2 mit mehreren Komponenten. In diesem Ausführungsbeispiel weist der Akkumulator 2 einen Datenspeicher 29 auf. Dieser Datenspeicher 29 umfasst einen geschützten Bereich 30, der insbesondere der ersten Steuereinheit 3 und/oder dem ersten Steuerkern 27 zugeordnet ist. Der Vorteil dieses geschützten Bereichs 30 besteht darin, dass wichtige Systemdaten, Betriebsparameter und/oder die Basisfirmware 25 sicher gespeichert und/oder vor unbefugtem Zugriff geschützt werden können. Dies gewährleistet die Integrität der Basisfirmware 25 und verhindert Manipulationen, die die Funktionalität des Akkumulators 2 beeinträchtigen könnten.

Wie aus dem Ausführungsbeispiel der Figur 5 hervorgeht, umfasst der Akkumulator 2 zudem zumindest eine Nahfunkschnittstelle 32 zur Nahbereichskommunikation und eine Fernfunkschnittstelle 33 zur Fernbereichskommunikation. Diese Schnittstellen 32, 33 sind in diesem Ausführungsbeispiel in die Akkudatenschnittstelle 5 integriert, was eine flexible und vielseitige Datenübertragung ermöglicht. Der Vorteil der Nahfunkschnittstelle 32 liegt in der Möglichkeit der schnellen und energieeffizienten Kommunikation über kurze Distanzen, beispielsweise mit einem nahegelegenen Endgerät 4 oder einer Dockingstation. Die Fernfunkschnittstelle 33 hingegen bietet den Vorteil, dass der Akkumulator 2 auch über größere Entfernungen hinweg mit anderen Geräten oder einem zentralen Server kommunizieren kann. Dies ist besonders vorteilhaft für Anwendungen, bei denen der Akkumulator 2 über das Internet der Dinge (IoT) eingebunden ist und regelmäßig Statusinformationen oder Betriebsdaten übertragen muss.

Zusätzlich ist in Figur 5 eine Erfassungseinheit 31 dargestellt, die der Akkumulator 2 umfasst. Diese Erfassungseinheit 31 dient zum Erfassen von Akkumulatorparametern und/oder Statusinformationen, wie beispielsweise dem Ladezustand, der Temperatur oder der Anzahl der Ladezyklen. Zusätzlich oder alternativ können mit Hilfe der Erfassungseinheit 31 auch Statusinformationen und/oder Endgeräteinformationen des Endgeräts 4 erfasst werden. Der Vorteil der Erfassungseinheit 31 besteht darin, dass sie eine kontinuierliche Überwachung der Betriebsbedingungen des Akkumulators 2 und/oder des Endgeräts 4 ermöglicht. Diese gesammelten Daten können genutzt werden, um die Leistung des Akkumulators 2 und/oder des Endgeräts 4 zu optimieren und frühzeitig auf mögliche Probleme zu reagieren.

Die Integration von Nah- und Fernfunkschnittstellen 32, 33 in die Akkudatenschnittstelle 5 ermöglicht eine flexible Kommunikation, die sowohl eine lokale als auch eine entfernte Steuerung und/oder Überwachung des Akkumulators 2 und/oder des Endgeräts 4 erlaubt. Diese Flexibilität trägt dazu bei, den Akkumulator 2 und/oder das Endgerät 4 in verschiedenen Umgebungen und/oder in verschiedenen Anwendungsszenarien effektiv einzusetzen.

### Bezugszeichenliste

- 1: System
- 2: Akkumulator
- 3: erste Steuereinheit
- 4: Endgerät
- 5: Akkudatenschnittstelle
- 6: Cloud
- 7: Smartphone
- 8: Laptop
- 9: Betriebsprogrammdaten
- 10: Innenraum
- 11: Energiespeichereinheit
- 12: Einzelzellen
- 13: erste Gehäusehälfte
- 14: zweite Gehäusehälfte
- 15: Leitung
- 16: Koppelbereich
- 17: Kontaktbereich
- 18: Kontaktelement
- 19: Fixiermechanismus
- 20: Fixierelement
- 21: Betätigungselement
- 22: Taste
- 23: Anzeige
- 24: zweite Steuereinheit
- 25: Basisfirmware
- 26: Individualfirmware
- 27: erster Steuerkern
- 28: zweiter Steuerkern
- 29: Datenspeicher
- 30: geschützter Bereich
- 31: Erfassungseinheit
- 32: Nahfunkschnittstelle
- 33: Fernfunkschnittstelle

## Patentansprüche

1. System (1)
mit zumindest einem Akkumulator (2), vorzugsweise Arbeitsgeräteakkumulator, Gartengeräteakkumulator und/oder Werkzeuggeräteakkumulator, insbesondere IoT-Akkumulator und/oder IoT-Arbeitsgeräteakkumulator, IoT-Gartengeräteakkumulator und/oder IoT-Werkzeuggeräteakkumulator,
wobei der Akkumulator (2) zumindest eine Steuereinheit (3, 24) zum Steuern und/oder Überwachen des Akkumulators (2) und/oder eines mit dem Akkumulator (2) gekoppelten Endgeräts (4) und
zumindest eine bidirektionale Akkudatenschnittstelle (5) zum Datenaustausch umfasst, und
mit zumindest einer Bereitstellungseinheit (6, 7, 8), von der Betriebsprogrammdaten (9) für die zumindest eine Steuereinheit (3) zum Steuern und/oder Überwachen des Akkumulators (2) und/oder des mit dem Akkumulator (2) gekoppelten Endgeräts (4) über die Akkudatenschnittstelle (5) an den Akkumulator (2) übertragen werden können.

2. System nach dem vorherigen Anspruch, **dadurch gekennzeichnet, dass** die zumindest eine Steuereinheit (3, 24) eine IoT-Steuereinheit ist.

3. System nach einem oder mehreren der vorherigen Ansprüche, **dadurch gekennzeichnet, dass** der Akkumulator (2) zumindest eine erste und eine zweite Steuereinheit (3, 24) umfasst und/oder
dass die zumindest eine Steuereinheit (3, 24) zumindest einen ersten und einen zweiten Steuerkern (27, 28) umfasst.

4. System nach einem oder mehreren der vorherigen Ansprüche, **dadurch gekennzeichnet, dass** die erste Steuereinheit (3) und/oder der erste Steuerkern (27) als Batteriemanagementsystem für den Akkumulator (2) ausgebildet ist und/oder dass die zweite Steuereinheit (24) und/oder der zweite Steuerkern (28) als Endgerätemanagementsystem für das Endgerät (4) ausgebildet ist.

5. System nach einem oder mehreren der vorherigen Ansprüche, **dadurch gekennzeichnet, dass** die zumindest eine Steuereinheit (3, 24) und/oder der zumindest eine Steuerkern (27, 28) derart ausgebildet sind, dass diese anhand der Betriebsprogrammdaten (9) eine Basisfirmware (25) und/oder eine Individualfirmware (26) erstellen können, wobei die Basisfirmware (25) für die erste Steuereinheit (3) und/oder den ersten Steuerkern (27) und/oder die Individualfirmware (26) für die zweite Steuereinheit (24) und/oder den zweiten Steuerkern (28) vorgesehen ist.

6. System nach einem oder mehreren der vorherigen Ansprüche, **dadurch gekennzeichnet, dass** die erste Steuereinheit (3) und/oder der erste Steuerkern (27) derart ausgebildet sind, dass diese mit Hilfe der Basisfirmware (25) den Akkumulator (2) steuern und/oder überwachen können, und/oder
dass die zweite Steuereinheit (24) und/oder der zweite Steuerkern (28) derart ausgebildet sind, dass diese mit Hilfe der Individualfirmware (26) das Endgerät (4) steuern und/oder überwachen können.

7. System nach einem oder mehreren der vorherigen Ansprüche, **dadurch gekennzeichnet, dass** eine Datenverbindung zwischen der ersten Steuereinheit (3) und/oder dem ersten Steuerkern (27) und der zweiten Steuereinheit (24) und/oder dem zweiten Steuerkern (28) derart ausgebildet ist, dass die zweite Steuereinheit (24) und/oder der zweite Steuerkern (28) ausschließlich von der ersten Steuereinheit (3) oder vom ersten Steuerkern (27) lesen, insbesondere nicht schreiben, kann.

8. System nach einem oder mehreren der vorherigen Ansprüche, **dadurch gekennzeichnet, dass** die zumindest eine Steuereinheit (3, 24) und/oder der zumindest eine Steuerkern (27, 28) derart ausgebildet sind, dass die Basisfirmware (25) vor der Individualfirmware (26) vor Zugriff geschützt ist und/oder von der Individualfirmware (26) unveränderbar ist, und/oder
dass der Akkumulator (2) einen Datenspeicher (29) umfasst, wobei der Datenspeicher (29) einen geschützten Bereich (30) umfasst, der insbesondere ausschließlich der ersten Steuereinheit (3) und/oder dem ersten Steuerkern (27) zugeordnet ist, und/oder
dass die erste Steuereinheit (3) und/oder der erste Steuerkern (27) vor einem Benutzerzugriff geschützt sind.

9. System nach einem oder mehreren der vorherigen Ansprüche, **dadurch gekennzeichnet, dass** die zumindest eine Bereitstellungseinheit (6, 7, 8) eine Cloud (6), eine Serverinfrastruktur, ein Smartphone (7), ein PC und/oder ein Laptop (8) ist und/oder
dass die zumindest eine Bereitstellungseinheit (6, 7, 8) eine, insbesondere grafische, Benutzeroberfläche und/oder eine, insbesondere grafische, Programmiersoftware umfasst, mittels der die Betriebsprogrammdaten (9) und/oder eine Firmware, insbesondere die Basisfirmware (25) und/oder die Individualfirmware (26), erstellt und/oder an den Akkumulator (2) übertragen werden können.

10. System nach einem oder mehreren der vorherigen Ansprüche, **dadurch gekennzeichnet, dass** der Akkumulator (2) zumindest eine Nahfunkschnittstelle (32) zur Nahbereichskommunikation und/oder eine Fernfunkschnittstelle (33) zur Fernbereichskommunikation umfasst, wobei die zumindest eine Akkudatenschnittstelle (5) vorzugsweise die Nahfunkschnittstelle (32) und/oder Fernfunkschnittstelle (33) umfasst, und/oder
dass der Akkumulator (2) zumindest eine Erfassungseinheit (31) zum Erfassen von Akkumulatorparametern und/oder Statusinformationen des Akkumulators (2) und/oder des Endgeräts (4) umfasst.

11. Verfahren zum Konfigurieren eines Akkumulators (2), der gemäß einem oder mehreren der vorherigen Ansprüche ausgebildet ist, **dadurch gekennzeichnet, dass** von zumindest einer Bereitstellungseinheit (6, 7, 8) eines Systems (1) Betriebsprogrammdaten (9) für die Steuereinheit (3, 24) zum Steuern und/oder Überwachen des Akkumulators (2) und/oder des mit dem Akkumulator (2) gekoppelten Endgeräts (4) über die Akkudatenschnittstelle (5) an den Akkumulator (2) übertragen werden.

12. Verfahren nach einem oder mehreren der vorherigen Ansprüche, **dadurch gekennzeichnet, dass** aus den Betriebsprogrammdaten (9) eine Basisfirmware (25) für die erste Steuereinheit (3) und/oder den ersten Steuerkern (27) erstellt wird und/oder
dass aus den Betriebsprogrammdaten (9) eine Individualfirmware (26) für die zweite Steuereinheit (24) und/oder den zweiten Steuerkern (28) erstellt wird und/oder
dass die zumindest eine Steuereinheit (3, 24) und/oder der zumindest eine Steuerkern (27, 28) eine Basisfirmware (25) und/oder eine Individualfirmware (26) aktualisiert.

13. Verfahren nach einem oder mehreren der vorherigen Ansprüche, **dadurch gekennzeichnet, dass** zur Konfiguration des Akkumulators (2) die Betriebsprogrammdaten (9), insbesondere manuell, mittels der Bereitstellungseinheit (6, 7, 8) erstellt werden und/oder
dass die Betriebsprogrammdaten (9) mittels einer grafischen Benutzeroberfläche der Bereitstellungseinheit (6, 7, 8) erstellt werden und/oder
dass die zumindest eine Steuereinheit (3, 24) und/oder der zumindest eine Steuerkern (27, 28) derart ausgebildet sind, dass diese automatisch nach den Betriebsprogrammdaten (9) suchen und/oder diese beziehen können.

14. Akkumulator (2) für ein System (1) nach einem oder mehreren der vorherigen Ansprüche.

15. Verwendung eines Akkumulators (2) für ein System (1) und/oder ein Verfahren nach einem oder mehreren der vorherigen Ansprüche.
